# FASCICULE DE BREVET EUROPEEN

(11) **EP 0 828 129 B1**
(45) Date de publication et mention de la délivrance du brevet: **25.04.2001**
(21) Numéro de dépôt: 97401992.9
(22) Date de dépôt: 27.08.1997
(51) Int. Cl.: F27D 3/00, F27D 5/00, B65G 47/26, F27D 3/12

(54) **Convoyeur muni d'un dispositif de positionnement et de calage de produits transportés sur un convoyeur**
Förderstrecke mit einer Bremslaufrollen- und Positioniervorrichtung für die gefördeten Produkten
Conveyor with positioning and locking means for the conveyed products

(30) Priorité: 04.09.1996 FR 9610758
(43) Date de publication de la demande: 11.03.1998
(73) Titulaire: Ceric, 75008 Paris (FR)
(72) Inventeur: Jacquet, André, 95120 Ermont (FR)
(74) Mandataire: Loyer, Bertrand

(56) Documents cités:
- EP-A- 0 168 573
- EP-A- 0 599 674
- DE-A- 4 127 207
- DE-C- 4 104 806
- FR-A- 2 567 493
- GB-A- 2 076 512
- JP-A- 60 144 228
- US-A- 1 641 186
- US-A- 5 056 656

## Description

La présente invention est relative à la technique des convoyeurs. Il est usuel dans les installations de manutention automatique, d'employer des convoyeurs du type convoyeur à bande à courroies ou à chaînes sur lesquels sont disposés les objets à manutentionner pour en assurer le transport d'un poste à un autre. Il est parfois nécessaire que ces objets soient exactement positionnés les uns par rapport aux autres et dans ce cas il est usuel d'utiliser des butées escamotables, contre lesquelles viennent buter les objets qui alors glissent sur la surface du convoyeur jusqu'à ce que la butée soit escamotée (DE 4 104 806 C).

Ce système à butées escamotables présente deux inconvénients: d'une part ces arrêts diminuent la cadence du transport, d'autre part lorsque les objets sont continuellement recyclés ils sont périodiquement heurtés au même emplacement ce qui les fragilise.

La présente invention sera décrite ci-après dans son application au transport de supports en matériau céramique destinés à la cuisson de produits céramiques, mais il est précisé que l'invention n'est pas limitée à cette application particulière.

Dans l'industrie de la terre cuite et par exemple dans la fabrication de tuiles il faut éviter que les tuiles crues qui sortent du séchoir ne se déforment du seul fait de leur poids pendant les opérations de manutention; de cuisson ou de séchage. Il est donc connu de les poser sur des supports individuels en matériau céramique résistants à de très hautes températures; puis on empile ces supports les uns sur les autres sur des wagonnets qui traversent le four ou le séchoir. Ces supports ayant une forme rappelant la forme d'un H, on les appelle "Support en H". Il faut donc: charger les produits crus un par un sur les H; empiler les H sur les wagonnets; les dépiler à la sortie du four; les charger un à un; puis les convoyer jusqu'au poste de chargement en produits crus.

Ces matériaux céramiques pouvant supporter un très grand nombre de cycles de chauffage/refroidissement sont à la fois onéreux et fragiles. Or dans une tuilerie il y a fréquemment en service de cinquante milles à quatre-vingt milles supports en H, c'est donc un investissement considérable et il est très important de manutentionner ces supports sans les casser; or les chocs répétés causés par les butées escamotables finissent par provoquer des micro-fissures ce qui entraîne des ruptures anticipées.

La présente invention a pour objet un dispositif de positionnement qui permet de remettre en place et de maintenir des objets placés sur un convoyeur par un dispositif automatique de manutention. Ces dispositifs sont assez précis et posent les produits sur un convoyeur avec une marge d'erreur de 1 à 5 millimètres environ, erreur, qui est rattrapée par le dispositif selon l'invention lequel ensuite maintient le produit en place.

Le dispositif selon la présente invention est constitué par les caractéristiques de la revendication 1.

Selon un premier mode de réalisation chaque galet pénètre dans un logement à ouverture évasée, ménagé sur le produit à caler.

Selon un deuxième mode de réalisation le dispositif comprend deux galets entre lesquels vient se coincer un élément du produit à caler.

Dans ce cas en fonction des dimensions'et de la nature du produit à caler l'un des galets peut être en matériau rigide pour assurer un positionnement précis, l'autre étant en matériau souple pour réaliser un appui du produit contre le galet en matériau rigide en compensant les variations de cote du produit à caler.

A titre d'exemple non limitatif et pour faciliter la compréhension de l'invention on a représenté un dessin annexe

Figure 1 une vue partielle illustrant un dispositif de positionnement et de calage selon l'invention.

Figure 2 une vue schématique illustrant la mise en oeuvre du dispositif de la figure 1.

Figure 3 une vue d'une variante du dispositif des figures 1 et 2.

Figure 4 une vue illustrant un deuxième mode de réalisation.

Figure 5 une vue selon A de la figure 1.

Toutes ces figures représentent des supports en H pour la manutention de produits en terre cuite.

On voit que le support en H désigné par la référence générale 1 comporte un plateau central 2, sensiblement horizontal, sur lequel sera posé le produit à cuire, ce plateau 2 étant porté par deux pieds 3 au moyen desquels lesdits supports 1 pourront être empilés les uns sur les autres.

Sur le convoyeur 10 sont fixés des socles 11 qui portent des galets.

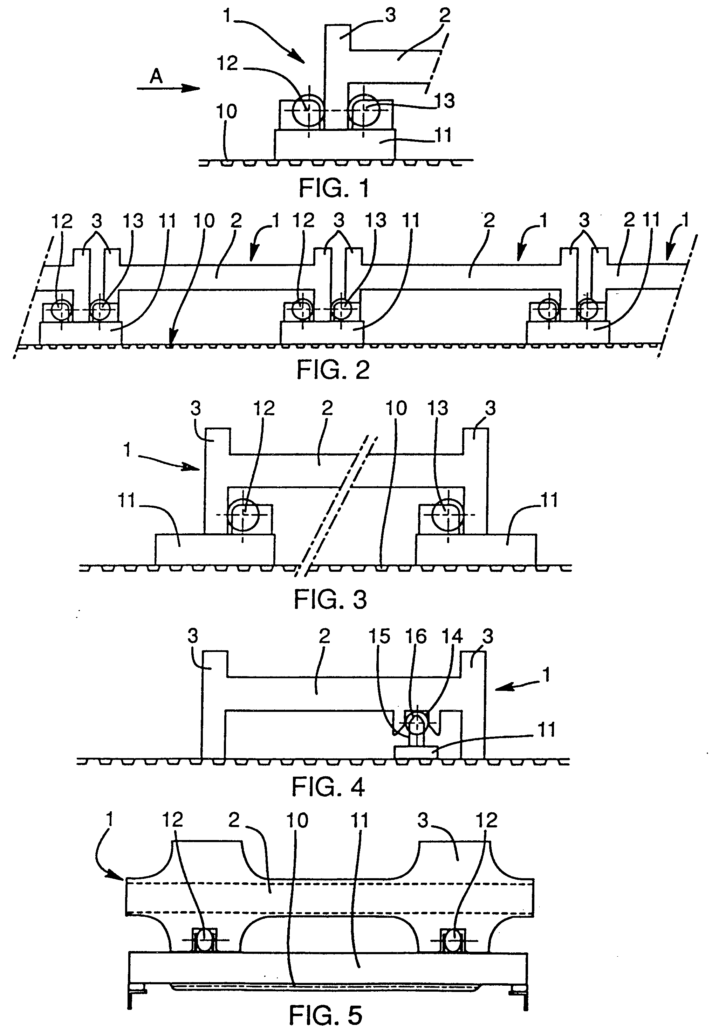

Dans l'exemple des figures 1, 2 et 5 les galets sont disposés par paires 12-13 et il y a de préférence deux paires de galets. L'écartement entre les galets 12-13 est égal (ou pratiquement égal) à l'épaisseur d'un pied 3 qui vient s'encastrer entre les deux galets 12 et 13 de chaque paire. La marge d'erreur qui est ainsi allouée au dispositif de manutention automatique est d'un côté de la moitié du diamètre du galet 12 et de l'autre côté de la moitié du diamètre du galet 13; ce qui fait au total un diamètre de galet. En conséquence le diamètre des galets sera déterminé en fonction des caractéristiques de l'automate de chargement.

Comme on le voit sur la figure 5 il est préférable de disposer deux paires de galets 12-13; mais on ne dispose ces galets que pour un côté du support 1, car il suffit pour le tenir et le positionner de tenir un seul pied.

On peut cependant, comme cela est représenté à la figure 3 réaliser le calage sur les deux pieds en mettant les galets 12 et 13 à l'intérieur de deux pieds 3.

Bien que cela ne soit pas représenté on pourrait aussi mettre les galets 12 et 13 à l'extérieur des deux pieds 3.

Selon une autre variante de réalisation on peut disposer sous le plateau 2 un logement 14 dont l'ouverture 15 est évasée, deux galets de positionnement et de blocage 16 venant s'encastrer dans le logement 14 lorsque le H est déposé sur le convoyeur.

Dans le cas des figures 1, 2, 3 et 5 les galets peuvent être: soit tous les deux en matériau dur; soit tous les deux en matériau souple; soit un en matériau dur et l'autre en matériau souple, celui en matériau dur assurant le positionnement précis et celui en matériau souple un appui contre le galet dur ce qui permet de compenser les éventuelles variations de cote.

Il est à noter que le dispositif ainsi décrit peut être employé pour positionner et caler sur un convoyeur tel que le convoyeur 10 tout produit devant être transporté et non pas uniquement des supports en H tel que le support 1. Tout produit ayant un élément analogue au pied 3 susceptible de venir s'encastrer entre les galets 12-13 ou pouvant comporter un logement 14 peut ainsi être calé.

## Revendications

1. Installation destinée au transport de produits, comportant des produits (1) et un convoyeur (10) destiné à transporter lesdits produits, équipé d'un dispositif de positionnement et de calage des produits, caractérisée en ce que ledit dispositif de positionnement et de calage des produits est constitué par au moins une paire de galets (12, 13, 16) portée par un socle (11) fixé audit convoyeur (10), cette paire de galets coopérant avec un élément (3 ; 14-15) du produit (1) pour le positionner et le caler.

2. L'installation selon la revendication 1 caractérisée par le fait que le produit (1) comporte au moins un élément vertical (3) qui vient s'encastrer entre les deux galets (12-13) d'une même paire de galets.

3. L'installation selon la revendication 1 caractérisée par le fait que le produit (1) comporte au moins deux éléments verticaux (3) entre lesquels viennent s'encastrer deux galets (12-13).

4. L'installation selon l'une ou l'autre des REVENDICATIONS 2 ou 3 dans lequel les deux galets (12-13) sont en matériau dur.

5. L'installation selon l'une ou l'autre des revendications 2 ou 3 dans lequel les galets (12-13) sont en matériau souple.

6. L'installation selon l'une ou l'autre des revendications 2 ou 3 dans lequel l'un des galets est en matériau dur pour assurer un positionnement précis, l'autre en matériau souple pour assurer un appui contre la galet dur en compensant les éventuelles variations de cote des éléments verticaux (3).

7. L'installation selon la revendication 1 dans lequel une paire de galets (16) vient s'encastrer dans un logement (14) ménagé sur le produit (1), ce logement (14) ayant une ouverture (15) évasée.

8. L'installation selon l'une quelconque des revendications précédentes dans lequel le produit (1) est un support en H comportant un plateau central (2) et deux pieds (3).

9. L'installation selon les revendications 2 et 8 dans lequel l'un des pieds (3) du support en H vient s'encastrer entre les deux galets (12-13).

10. L'installation selon les revendications 3 et 8 dans lequel les deux galets viennent s'encastrer entre les deux pieds (3) du support en H.

11. L'installation selon les revendications 7 et 8 dans lequel le logement (14) est disposé en-dessous du plateau horizontal (2).

## Claims

1. An installation intended for transporting products, comprising products (1) and a conveyor (10) intended to transport said products, equipped with a device for positioning and wedging the products, characterised in that said device for positioning and wedging the products is formed by at least one pair of rollers (12, 13, 16) borne by a base (11) fixed to said conveyor (10), this pair of rollers cooperating with an element (3; 14-15) of the product (1) for positioning and wedging it.

2. The installation according to Claim 1, characterised by the fact that the product (1) comprises at least one vertical element (3) which is inserted between the two rollers (12-13) of one and the same pair of rollers.

3. The installation according to Claim 1, characterised by the fact that the product (1) comprises at least two vertical elements (3) between which two rollers (12-13) are inserted.

4. The installation according to one or the other of Claims 2 or 3 in which the two rollers (12-13) are made of hard material.

5. The installation according to one or the other of Claims 2 or 3 in which the rollers (12-13) are made of flexible material.

6. The installation according to one or the other of Claims 2 or 3 in which one of the rollers is of hard material to ensure accurate positioning, and the other of flexible material to ensure that it bears against the hard roller, compensating for any possible variations in dimensions of the vertical elements (3).

7. The installation according to Claim 1 in which a pair of rollers (16) is inserted in a housing (14) formed on the product (1), this housing (14) having a flared opening (15).

8. The installation according to any one of the preceding claims, in which the product (1) is an H-shaped support comprising a central plate (2) and two feet (3).

9. The installation according to Claims 2 and 8 in which one of the feet (3) of the H-shaped support is inserted between the two rollers (12-13).

10. The installation according to Claims 3 and 8 in which the two rollers are inserted between the two feet (3) of the H-shaped support.

11. The installation according to Claims 7 and 8 in which the housing (14) is arranged below the horizontal plate (2).

## Patentansprüche

1. Anlage zum Transport von Produkten, die Produkte (1) und eine zum Fördern dieser Produkte bestimmte Fördereindchtung (10) umfaßt, die mit einer Vorrichtung zum Ausrichten und Blockieren der Produkte ausgestattet ist, dadurch gekennzeichnet, daß die Vorrichtung zum Ausrichten und Blockieren der Produkte aus mindestens einem Paar von Rollen (12, 13, 16) besteht, das von einer Grundplatte (11) getragen wird, die an der Fördereinrichtung (10) befestigt ist, wobei das Rollenpaar mit einem Teil (3, 14-15) des Produktes (1) zusammenwirkt, um dieses auszurichten und zu blockieren.

2. Anlage nach Anspruch 1, dadurch gekennzeichnet, daß das Produkt (1) mindestens ein vertikales Teil (3) umfaßt, das zwischen den beiden Rollen (12-13) eines Rollenpaares eingespannt wird.

3. Anlage nach Anspruch 1, dadurch gekennzeichnet, daß das Produkt (1) mindestens zwei vertikale Teile (3) aufweist, zwischen denen zwei Rollen (12-13) eingespannt werden.

4. Anlage nach Anspruch 2 oder 3, bei der die beiden Rollen (12-13) aus hartem Material bestehen.

5. Anlage nach Anspruch 2 oder 3, bei der die Rollen (12-13) aus weichem Material bestehen.

6. Anlage nach Anspruch 2 oder 3, bei der eine der Rollen aus hartem Material besteht, um eine genaue Ausrichtung zu gewährleisten, und die andere aus weichem Material gebildet ist, um einen Druck gegen die harte Rolle sicherzustellen und damit mögliche Maßschwankungen der vertikalen Teile (3) auszugleichen.

7. Anlage nach Anspruch 1, bei der ein Rollenpaar (16) in einer am Produkt (1) ausgebildeten Ausnehmung (14) eingespannt wird, wobei diese Ausnehmung (14) eine sich erweiternde Öffnung (15) aufweist.

8. Anlage nach einem der vorhergehenden Ansprüche, bei der das Produkt (1) ein H-Träger mit einer Mittelplatte (2) und zwei Füßen (3) ist.

9. Anlage nach den Ansprüchen 2 und 8, bei der einer der Füße (3) des H-Trägers zwischen den beiden Rollen (12-13) eingespannt wird.

10. Anlage nach den Ansprüchen 3 und 8, bei der die beiden Rollen zwischen den beiden Füßen (3) des H-Trägers eingespannt werden.

11. Anlage nach den Ansprüchen 7 und 8, bei der die Ausnehmung (14) unterhalb der horizontalen Platte (2) angeordnet ist.
